# EUROPEAN PATENT SPECIFICATION

(11) **EP 3 185 521 B1**
(45) Date of publication and mention of the grant of the patent: **17.10.2018**
(21) Application number: 15833702.2
(22) Date of filing: 13.04.2015
(51) Int. Cl.: H04M 1/725, H04B 1/40, H04W 52/02

(54) **VOICE WAKE-UP METHOD AND DEVICE**
STIMMAUFWECKVERFAHREN UND -VORRICHTUNG
PROCÉDÉ ET DISPOSITIF DE RÉVEIL VOCAL

(30) Priority: 19.08.2014 CN 201410410717
(43) Date of publication of application: 28.06.2017
(73) Proprietor: ZTE Corporation, Shenzhen, Guangdong 518057 (CN)
(72) Inventor: LIU, Fengpeng, Shenzhen Guangdong 518057 (CN); LIU, Dongmei, Shenzhen Guangdong 518057 (CN)
(74) Representative: Lavoix
(86) International application number: PCT/CN2015/076493
(87) International publication number: WO 2016/026316

(56) References cited:
- CN-A- 102 546 953
- CN-A- 103 747 129
- CN-A- 103 955 149
- CN-U- 202 384 000
- JP-A- 2008 236 288
- JP-A- 2011 259 088
- US-A- 6 070 140
- US-A1- 2009 043 580

## Description

### TECHNICAL FIELD

The present disclosure relates to voice signal processing techniques in the field of circuit design, and in particular to a wake-on-voice method and device.

### BACKGROUND

With the progress of science and technology, there are a variety of applications for a mobile terminal, such as a pedometer application, a navigation application, a health monitoring application, a wake-on-voice application and the like, among which the wake-on-voice application has become the focus of the industry. In existing wake-on-voice techniques, a separate voice recognition hardware system and a separate voice recognition software system are used.

During implementation of the present application, the applicant finds that the existing wake-on-voice techniques include at least the following disadvantages.

In the existing wake-on-voice techniques, an additional microphone is required to be dedicatedly arranged to acquire a wake-on-voice signal, and thus it is required to design an audio circuit, a specific structure and an identification (ID) mechanism for the dedicatedly arranged microphone. Therefore, it makes the design of the terminal to be complicated and costly.

JP 2008-236288 A discloses a method of transmitting electronic data from an image forming apparatus such as a multifunction peripheral to a predetermined storage destination.

### SUMMARY

In view of the above, embodiments of the disclosure are intended to provide a wake-on-voice method and device, which can implement wake-on-voice with a simple and low-cost circuit structure.

The invention is defined in the claims.

The features of the methods and devices according to the present disclosure are defined in the independent claims, and the preferable features according to the present invention are defined in the dependent claims.

To this end, the technical solutions of the disclosure are implemented as follows.

There is provided a terminal, including a microphone, a power supply switching control circuit, a data switching control circuit, a wake-on-voice circuit and a wake-on-voice power supply,
herein the microphone is arranged to acquire a voice signal and input the voice signal to the data switching control circuit;
the power supply switching control circuit is arranged to, when receiving an wake-on-voice instruction, supply the microphone through the wake-on-voice power supply;
the data switching control circuit is arranged to, when receiving the wake-on-voice instruction, input the voice signal to the wake-on-voice circuit; and
the wake-on-voice circuit is arranged to preprocess and match the input voice signal, and perform an operation according to a matching result.

In an embodiment, the wake-on-voice circuit may include a wake-on-voice preprocessing circuit and a wake-on-voice matching circuit,
herein the wake-on-voice preprocessing circuit is arranged to preprocess the input voice signal and input the preprocessed voice signal to the wake-on-voice matching circuit; and
the wake-on-voice matching circuit is arranged to match the preprocessed voice signal and perform the operation according to the matching result.

In an embodiment, the terminal may further include a terminal main control processing circuit and a terminal main control power supply,
herein the power supply switching control circuit is further arranged to, when receiving an instruction indicating normal voice operation, supply the microphone through the terminal main control power supply;
the data switching control circuit is further arranged to, when receiving the instruction indicating normal voice operation, input the voice signal to the terminal main control processing circuit; and
the terminal main control processing circuit is arranged to process the input voice signal to perform the normal voice operation.

In an embodiment, the power supply switching control circuit may be implemented by a first switching circuit including a first switch, a first capacitor, a first reference power supply and a first signal amplifier, the first switch including a Common (COM) terminal, a Normally Open (NO) terminal, a Normally Closed (NC) terminal, a control (CTR) terminal, a power supply terminal and a ground terminal; and/or
the data switching control circuit may be implemented by a second switching circuit and a third switching circuit, herein the second switching circuit includes a second switch, a second capacitor, a second reference power supply and a second signal amplifier, the second switch including a COM terminal, an NO terminal, an NC terminal and a CTR terminal; and the third switching circuit includes a third switch, a third capacitor, a third reference power supply and a third signal amplifier, the third switch including a COM terminal, an NO terminal, an NC terminal, a CTR terminal, a power supply terminal and a ground terminal.

In an embodiment, in the first switching circuit, the COM terminal of the first switch is connected to a COM terminal of a power supply of the microphone, the NC terminal of the first switch is connected to the wake-on-voice power supply, the NO terminal of the first switch is connected to the terminal main control power supply, the CTR terminal of the first switch is connected to an output of the first signal amplifier, the power supply terminal of the first switch is connected to the first reference power supply and to an end of the first capacitor, the ground terminal of the first switch is grounded, and the other end of the first capacitor is grounded;
in the second switching circuit, the COM terminal of the second switch is connected to a P signal terminal of the microphone, the NC terminal of the second switch is connected to a P signal input of the wake-on-voice circuit, the NO terminal of the second switch is connected to a P signal input of the terminal main control processing circuit, the CTR terminal of the second switch is connected to an output of the second signal amplifier, the power supply terminal of the second switch is connected to the second reference power supply and to an end of the second capacitor, the ground terminal of the second switch is grounded, and the other end of the second capacitor is grounded;
in the third switching circuit, the COM terminal of the third switch is connected to an N signal terminal of the microphone, the NC terminal of the third switch is connected to an N signal input of the wake-on-voice circuit, the NO terminal of the third switch is connected to an N signal input of the terminal main control processing circuit, the CTR terminal of the third switch is connected to an output of the third signal amplifier, the power supply terminal of the third switch is connected to the third reference power supply and to an end of the third capacitor, the ground terminal of the third switch is grounded, and the other end of the third capacitor is grounded.

In an embodiment, the wake-on-voice preprocessing circuit may include a fourth capacitor, a fifth capacitor, a sixth capacitor, a seventh capacitor, an eighth capacitor, a ninth capacitor, a fourth signal amplifier, a fifth signal amplifier, a first low pass filter, a second low pass filter; and/or, the wake-on-voice matching circuit may include an analog-to-digital converter (ADC), a Micro Controller Unit (MCU) and a memory.

In an embodiment, in the wake-on-voice preprocessing circuit, an input of the fourth capacitor is connected to a P signal input, an output of the fourth capacitor is connected to an input of the fourth signal amplifier; an output of the fourth signal amplifier is connected to an input of the sixth capacitor; an output of the sixth capacitor is connected to an input of the first low pass filter; an output of the first low pass filter is connected to an input of the eighth capacitor; an output of the eighth capacitor is connected to an input of the wake-on-voice matching circuit; an input of the fifth capacitor is connected to an N signal input, and an output of the fifth capacitor is connected to an input of the fifth signal amplifier; an output of the fifth signal amplifier is connected to an input of the seventh capacitor; an output of the seventh capacitor is connected to an input of the second low pass filter; an output of the second low pass filter is connected to an input of the ninth capacitor; an output of the ninth capacitor is connected to the input of the wake-on-voice matching circuit;
in the wake-on-voice matching circuit, an input of the ADC is connected an output of the wake-on-voice preprocessing circuit, an output of the ADC is connected to an input of the MCU, and the memory is connected to the input of the MCU.

Based the aforementioned terminal, there is further provided a wake-on-voice method for a terminal, including:
upon reception of an wake-on-voice instruction, a microphone is supplied through a wake-on-voice power supply, and a voice signal is acquired through the microphone; and
the voice signal is preprocessed and matched, and an operation is performed according to a matching result.

In an embodiment, the step that the voice signal is preprocessed and matched, and the operation is performed according to the matching result may include:
amplification and low pass filtering is performed on the voice signal to obtain the preprocessed voice signal;
analog-to-digital conversion is performed on the preprocessed voice signal to obtain a digitalized voice signal;
the digitalized voice signal is compared with a plurality of stored voice template signals;
if a degree of matching between the digitalized voice signal and one of the stored voice template signals is greater than a matching degree threshold, the terminal is waken up;
if degrees of matching between the digitalized voice signal and all of the stored voice template signals are smaller than the matching degree threshold, the processing is ended.

In an embodiment, the method may further include:
upon reception of an instruction indicating normal voice operation, the microphone is supplied through a terminal main control power supply; and
the voice signal is acquired through the microphone, and the voice signal is processed to perform the normal voice operation.

In the wake-on-voice method and device provided by the embodiments of the disclosure, the microphone, the wake-on-voice power supply, the wake-on-voice matching circuit, the terminal main control power supply, the terminal main control processing circuit are built-in circuits of the terminal per se; with only one microphone provided in the terminal for being used in a time division multiplexing way, a wake-on-voice function and a normal voice function can both be implemented without following the existing wake-on-voice techniques in which an additional microphone is required to be dedicatedly arranged to acquire a wake-on-voice signal and thus it is required to design an audio circuit, a specific structure and an identification (ID) mechanism for the dedicatedly arranged microphone. In this way, the technical solutions according to embodiments of the disclosure can implement wake-on-voice with a simple and low-cost circuit structure.

### BRIEF DESCRIPTION OF THE DRAWINGS

Fig, 1 is a schematic structural diagram of a terminal according to an embodiment of the disclosure;
Fig, 2 is a schematic structural diagram of a power supply switching control circuit according to an embodiment of the disclosure;
Fig, 2 is a schematic structural diagram of a second switching circuit of a data switching control circuit according to an embodiment of the disclosure;
Fig, 2 is a schematic structural diagram of a third switching circuit of the data switching control circuit according to an embodiment of the disclosure;
Fig, 4 is a schematic structural diagram of a wake-on-voice preprocessing circuit according to an embodiment of the disclosure;
Fig, 5 is a schematic structural diagram of a wake-on-voice matching circuit according to an embodiment of the disclosure; and

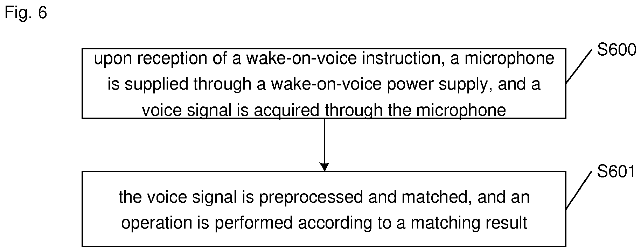

Fig. 6 is a flow chart of a wake-on-voice method according to an embodiment of the disclosure.

### DETAILED DESCRIPTION

In an embodiment of the disclosure, upon reception of an wake-on-voice instruction, a microphone is supplied through a wake-on-voice power supply, and a voice signal is acquired through the microphone; the voice signal is preprocessed and matched, and an operation is performed according to a matching result.

Specific embodiments of the disclosure will be further elaborated below with reference to the drawings.

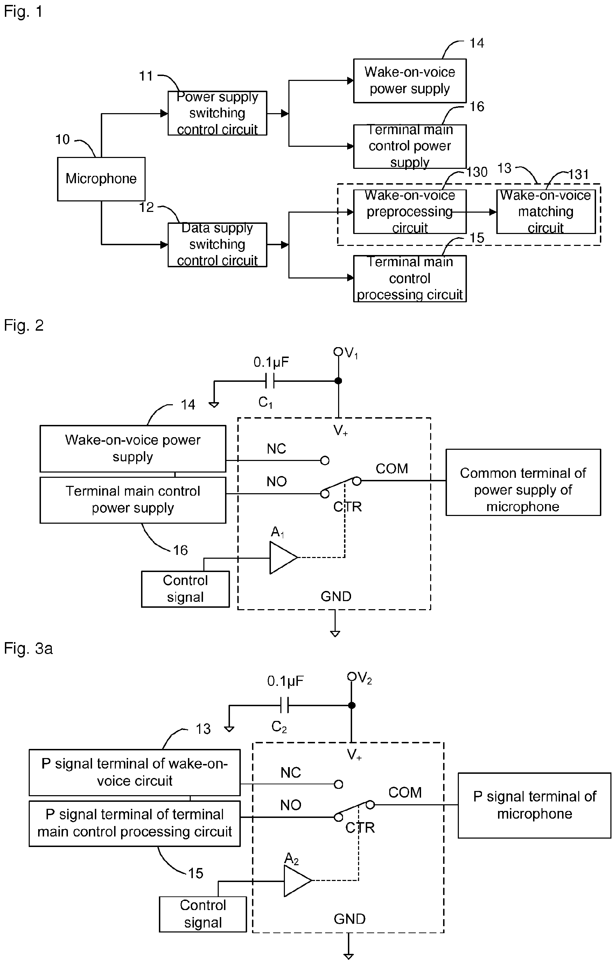

As shown in Fig. 1, an embodiment of the disclosure provides a terminal, including a microphone 10, a power supply switching control circuit 11, a data switching control circuit 12, a wake-on-voice circuit 13, and a wake-on-voice power supply 14.

The microphone 10 is arranged to acquire a voice signal and input the voice signal to the data switching control circuit 12.

The power supply switching control circuit 11 is arranged to, when receiving a wake-on-voice instruction, supply the microphone 10 through the wake-on-voice power supply 14.

The data switching control circuit 12 is arranged to, when receiving the wake-on-voice instruction, input the voice signal to the wake-on-voice circuit 13.

The wake-on-voice circuit 13 is arranged to preprocess and match the input voice signal, and perform an operation according to a matching result.

Herein, when a user activates a wake-on-voice function of the terminal, a processor of the terminal can identify an operation of the user for activating the wake-on-voice function, and the processor sends a wake-on-voice instruction to the power supply switching control circuit 11; upon reception of the wake-on-voice instruction, the power supply switching control circuit 11 determines that the terminal is in a state waiting for wake-on-voice, the microphone 10 is supplied by the wake-on-voice power supply 14, and then the microphone 10 begins acquiring a voice signal.

Specifically, the wake-on-voice circuit 13 includes a wake-on-voice preprocessing circuit 130 and a wake-on-voice matching circuit 131.

The wake-on-voice preprocessing circuit 130 is arranged to preprocess the input voice signal and input the preprocessed voice signal to the wake-on-voice matching circuit 131.

The wake-on-voice matching circuit 131 is arranged to match the preprocessed voice signal and perform the operation according to the matching result.

Further, the terminal may further include a terminal main control processing circuit 15 and a terminal main control power supply 16.

The power supply switching control circuit 11 is further arranged to, when receiving an instruction indicating normal voice operation, supply the microphone 10 through the terminal main control power supply 16.

The data switching control circuit 12 is further arranged to, when receiving the instruction indicating normal voice operation, input the voice signal to the terminal main control processing circuit 15.

The terminal main control processing circuit 15 is arranged to process the input voice signal to perform the normal voice operation.

Herein, when receiving an instruction indicating normal voice operation, the power supply switching control circuit 11 determines that the terminal is in a state for normal voice operation, the microphone 10 is supplied through the terminal main control power supply 16, and then the microphone begins acquiring the voice signal.

Herein, the state for normal voice operation generally refers to an operation state where an audio or video conversation is performed on the terminal.

Specific structure and connection between various devices of the power supply switching control circuit 11 is elaborated below with reference to Fig. 2.

As shown in Fig. 2, the power supply switching control circuit 11 is implemented by a first switching circuit including a first switch K₁, a first capacitor C₁, a first reference power supply V₁ and a first signal amplifier A₁, the first switch K₁ including a Common (COM) terminal, a Normally Open (NO) terminal, a Normally Closed (NC) terminal, a control (CTR) terminal, a power supply terminal and a ground terminal.

The connections between devices of the first switching circuit are as follows.

The COM terminal of the first switch K₁ is connected to a COM terminal of a power supply of the microphone 10, the NC terminal of the first switch is connected to the wake-on-voice power supply 14, the NO terminal of the first switch K₁ is connected to the terminal main control power supply 16, the CTR terminal of the first switch K₁ is connected to an output of the first signal amplifier A₁, the power supply terminal of the first switch K₁ is connected to the first reference power supply V₁ and to an end of the first capacitor C₁, the ground terminal of the first switch K₁ is grounded, and the other end of the first capacitor C₁ is grounded.

Herein, switching of the NO and NC terminals of the first switch K₁ is controlled by the CTR terminal; upon reception of a wake-on-voice instruction, the CTR terminal outputs a high/low level control signal through the first signal amplifier A₁ to control the NC terminal of the first switch K₁ to connect to the COM terminal; upon reception of an instruction indicating normal voice operation, the CTR terminal outputs a low/high level control signal through the first signal amplifier A₁ to control the NO terminal of the first switch K₁ to connect to the COM terminal; in this way, switching of the power supply of the microphone is implemented. Herein, the control signal can be sent by a control device of the terminal, such as a processor and the like.

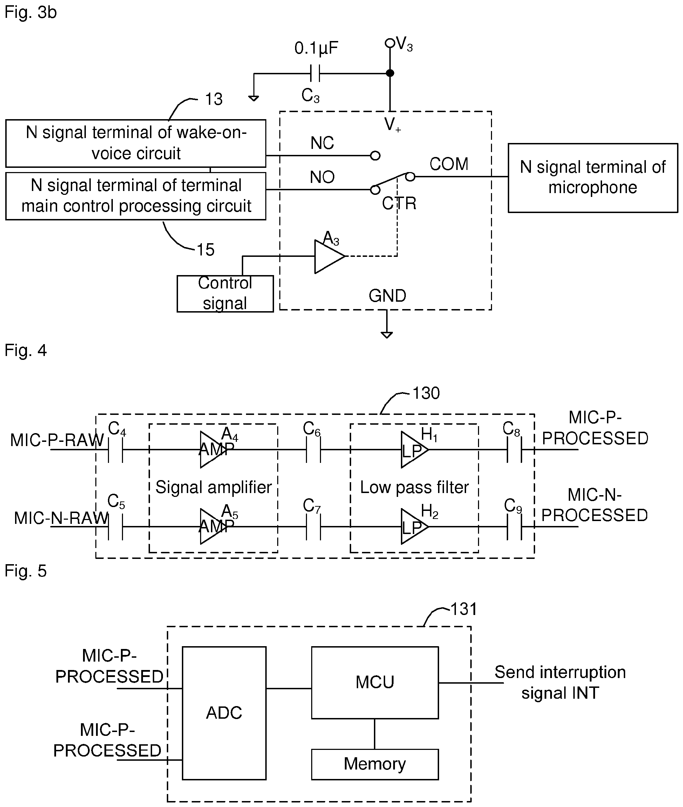

Specific structure and connection between various devices of the data switching control circuit 12 is elaborated below with reference to Fig. 3.

As shown in Fig. 3a, the data switching control circuit 12 is implemented by a second switching circuit and a third switching circuit, herein the second switching circuit includes a second switch K₂, a second capacitor C₂, a second reference power supply V₂ and a second signal amplifier A₂, the second switch K₂ including a COM terminal, an NO terminal, an NC terminal and a CTR terminal;
as shown in Fig. 3b, the third switching circuit includes a third switch K₃, a third capacitor C₃, a third reference power supply V₃ and a third signal amplifier A₃, the third switch K₃ including a COM terminal, an NO terminal, an NC terminal, a CTR terminal, a power supply terminal and a ground terminal.

The connections between devices of the second switching circuit are as follows.

The COM terminal of the second switch K₂ is connected to a P signal terminal of the microphone 10, the NC terminal of the second switch K₂ is connected to a P signal input of the wake-on-voice circuit 13, the NO terminal of the second switch K₂ is connected to a P signal input of the terminal main control processing circuit 15, the CTR terminal of the second switch K₂ is connected to an output of the second signal amplifier A₂, the power supply terminal of the second switch K₂ is connected to the second reference power supply V₂ and to an end of the second capacitor C₂, the ground terminal of the second switch K₂ is grounded, and the other end of the second capacitor C₂ is grounded.

The connections between devices of the third switching circuit are as follows.

The COM terminal of the second switch K₃ is connected to an N signal terminal of the microphone 10, the NC terminal of the second switch K₃ is connected to an N signal input of the wake-on-voice circuit 13, the NO terminal of the second switch K₃ is connected to an N signal input of the terminal main control processing circuit 15, the CTR terminal of the second switch K₃ is connected to an output of the second signal amplifier A₃, the power supply terminal of the second switch K₃ is connected to the second reference power supply V₃ and to an end of the second capacitor C₃, the ground terminal of the second switch K₃ is grounded, and the other end of the second capacitor C₃ is grounded.

Herein, the voice signals are acquired through the P signal terminal and N signal terminal of the microphone 10, and the acquired voice signals are input respectively to the second switching circuit and the third switching circuit; the input of the wake-on-voice circuit 13 includes a P signal input and an N signal input, and the input of the terminal main control processing circuit 15 also includes a P signal input and an N signal input.

Herein, switching of the NO and NC terminals of the second switch K₂ is controlled by the CTR terminal; upon reception of a wake-on-voice instruction, the CTR terminal outputs a high/low level control signal through the first signal amplifier A₁ to control the NC terminal of the second switch K₂ to connect to the COM terminal; upon reception of an instruction indicating normal voice operation, the CTR terminal outputs a low/high level control signal through the second signal amplifier A₂ to control the NO terminal of the second switch K₂ to connect to the COM terminal; in this way, control of switching of the P signal terminal of the microphone is implemented. Herein, the control signal can be sent by a control device of the terminal, such as a processor and the like.

Herein, switching of the NO and NC terminals of the third switch K₃ is controlled by the CTR terminal; upon reception of a wake-on-voice instruction, the CTR terminal outputs a high/low level control signal through the first signal amplifier A₁ to control the NC terminal of the third switch K₃ to connect to the COM terminal; upon reception of an instruction indicating normal voice operation, the CTR terminal outputs a low/high level control signal through the third signal amplifier A₃ to control the NO terminal of the third switch K₃ to connect to the COM terminal; in this way, control of switching of the N signal terminal of the microphone is implemented. Herein, the control signal can be sent by a control device of the terminal, such as a processor and the like.

Specific structure and connection between various devices of the wake-on-voice preprocessing circuit 130 is elaborated below with reference to Fig. 4.

As shown in Fig. 4, the wake-on-voice preprocessing circuit 130 includes a fourth capacitor C₄, a fifth capacitor C₅, a sixth capacitor C₆, a seventh capacitor C₇, an eighth capacitor C₈, a ninth capacitor C₉, a fourth signal amplifier A₄, a fifth signal amplifier A₅, a first low pass filter H₁, a second low pass filter H₂.

The connections between devices of the wake-on-voice preprocessing circuit 130 are as follows.

An input of the fourth capacitor C₄ is connected to a P signal input, an output of the fourth capacitor C₄ is connected to an input of the fourth signal amplifier A₄; an output of the fourth signal amplifier A₄ is connected to an input of the sixth capacitor C₆; an output of the sixth capacitor C₆ is connected to an input of the first low pass filter H₁; an output of the first low pass filter H₁ is connected to an input of the eighth capacitor C₈; an output of the eighth capacitor C₈ is connected to an input of the wake-on-voice matching circuit 131; an input of the fifth capacitor C₅ is connected to an N signal input, and an output of the fifth capacitor C₅ is connected to an input of the fifth signal amplifier A₅; an output of the fifth signal amplifier A₅ is connected to an input of the seventh capacitor C₇; an output of the seventh capacitor C₇ is connected to an input of the second low pass filter H₂; an output of the second low pass filter H₂ is connected to an input of the ninth capacitor C₉; an output of the ninth capacitor C₉ is connected to the input of the wake-on-voice matching circuit 131.

Herein, the P and N signal terminals of the microphone 10 acquires a positive voice signal and a negative voice signal respectively, the positive voice signal is denoted as MIC_P_RAW and the negative voice signal is denoted as MIC_N_RAW; firstly, the wake-on-voice preprocessing circuit isolates the switched MIC_P_RAW and MIC_N_RAW through the fourth capacitor C₄ and the fifth capacitor C₅ so that the wake-on-voice preprocessing circuit 130 and the data switching control circuit 121 have no interference on each other; then, the MIC_P_RAW and MIC_N_RAW subjected to isolation are amplified through the fourth amplifier A₄ and the fifth amplifier A₅ respectively for subsequent processing, herein the fourth amplifier A₄ and the fifth amplifier A₅ are analog amplifier, and their enlargement factors are set according to a range of amplitude of the ADC; the amplified voice signals are isolated through the sixth capacitor C₆ and the seventh capacitor C₇ so that there is no interference between front-stage and rear-stage circuits; low pass filtering is performed on the voice signals subjected to isolation by using a pair of low pass filters, i.e., a first low pass filter H₁ and a second low pass filter H₂ so that only low-frequency signals are reserved, herein the filtering ranges of the first low pass filter H₁ and the second low pass filter H₂ are determined according to a range of frequency of voice template signals in the MCU and memory, and after filtering through the first low pass filter H₁ and the second low pass filter H₂, voice signals having corresponding frequencies are obtained; the voice signals having corresponding frequencies are isolated through the eighth capacitor C₈ and the ninth capacitor C₉ so that there is no interference between the wake-on-voice preprocessing circuit 130 and the wake-on-voice matching circuit 131; finally, after the preprocessing is completed, the resulting positive voice signal MIC_P_RROCESSED and the resulting negative voice signal MIC_N_RROCESSED are obtained.

Specific structure and connection between various devices of the wake-on-voice matching circuit 131 is elaborated below with reference to Fig. 5.

As shown in Fig. 5, the wake-on-voice matching circuit 131 includes an analog-to-digital converter (ADC), a Micro Controller Unit (MCU) and a memory.

The connections between devices of the wake-on-voice matching circuit 131 are as follows.

An input of the ADC is connected an output of the wake-on-voice preprocessing circuit, an output of the ADC is connected to an input of the MCU, and the memory is connected to the input of the MCU.

Herein, the processed positive voice signal MIC_P_RROCESSED and the processed negative voice signal MIC_N_RROCESSED are input to the ADC for analog-to-digital conversion to obtain a digitalized voice signal that is input to the MCU, and the MCU compares the digitalized voice signal with multiple voice template signals stored in the memory, herein the multiple voice template signals are recorded in advance as criteria based on which voice matching is performed; if a degree of matching between the digitalized voice signal and one of the stored voice template signals is greater than a matching degree threshold, an interruption signal INT is transmitted to wake up the terminal; if degrees of matching between the digitalized voice signal and all of the stored voice template signals are smaller than the matching degree threshold, the processing is ended and the terminal keeps waiting.

For example, "Hello LUT" and "LUT Hello" are recorded in advance as criteria based on which voice matching is performed, "Hello LUT" is converted to digital voice signal 1010111010, "LUT Hello" is converted to digital voice signal 1101010101, an acquired digitalized voice signal is 1010111110, and the preset matching degree threshold is 80%; the digitalized voice signal 1010111110 is compared sequentially with the two criteria for voice matching, since a degree of matching between the digitalized signal 1010111010 and one of the criteria, 1010111110, is 90%, the matching succeeds and an INT signal is transmitted to wake up the terminal.

Herein, the matching degree threshold can be preset according to practical conditions, and generally, the matching degree threshold has a range of 70%-80%.

Herein, the analog-to-digital conversion includes sampling, quantifying and coding. And the sampling frequency is set according to a sampling rate at which voice template signals are digitalized subsequently in the MCU and the memory.

In the embodiment of the disclosure, based on the above circuit structure and connections between devices, the operation principle for wake-on-voice is as follows.

Firstly, the power supply switching control circuit 11 supplies the microphone 10 through the wake-on-voice power supply 14 when receiving an wake-on-voice instruction.

Then, the microphone 10 acquires a voice signal and inputs the voice signal to the data switching control circuit 12; the data switching control circuit 12 transmits the voice signal to the wake-on-voice circuit 13.

Finally, the wake-on-voice circuit 13 preprocesses and matches the input voice signal, and performs an operation according to a matching result.

Herein, the step that the wake-on-voice circuit 13 preprocesses and matches the voice signal and performs the operation according to the matching result includes:
firstly, the wake-on-voice preprocessing circuit 130 performs preprocessing operations such as amplification and low pass filtering on the voice signal, and inputs the preprocessed voice signal to the wake-on-voice matching circuit 131;
then, the wake-on-voice matching circuit 131 performs analog-to-digital conversion on the preprocessed voice signal to obtain a digitalized voice signal; the digitalized voice signal is compared with multiple stored voice template signals;
if a degree of matching between the digitalized voice signal and one of the stored voice template signals is greater than a matching degree threshold, the terminal is waken up;
if degrees of matching between the digitalized voice signal and all of the stored voice template signals are smaller than the matching degree threshold, the processing is ended.

According to the embodiments of the disclosure, the microphone 10, the wake-on-voice power supply 14, the wake-on-voice matching circuit 131, the terminal main control power supply 16, the terminal main control processing circuit 15 are built-in circuits of the terminal per se; with only one microphone provided in the terminal for being used in a time division multiplexing way, a wake-on-voice function and a normal voice function can both be implemented without following the existing wake-on-voice techniques in which an additional microphone is required to be dedicatedly arranged to acquire a wake-on-voice signal and thus it is required to design an audio circuit, a specific structure and an identification (ID) mechanism for the dedicatedly arranged microphone. In this way, the technical solutions according to embodiments of the disclosure can implement wake-on-voice with a simple and low-cost circuit structure.

Based on same technical ideas, an embodiment of the disclosure further provides a wake-on-voice method, since the principle of the method is similar to that of the current sampling circuit, for the implementation of the method and its principle, please refer to the implementation of the device and its corresponding principle, and duplicated content thereof will be omitted.

As shown in Fig. 6, the wake-on-voice method provided by the embodiment of the disclosure includes the following steps.

Step S600: upon reception of a wake-on-voice instruction, a microphone is supplied through a wake-on-voice power supply, and a voice signal is acquired through the microphone.

Herein, upon reception of the wake-on-voice instruction, the microphone is supplied through a wake-on-voice power supply, and then the microphone begins acquiring the voice signal.

Step S601: the voice signal is preprocessed and matched, and an operation is performed according to a matching result.

Specifically, the step that the voice signal is preprocessed includes: amplification and low pass filtering is performed on the voice signal to obtain the preprocessed voice signal.

Then, analog-to-digital conversion is performed on the preprocessed voice signal to obtain a digitalized voice signal.

The digitalized voice signal is compared with multiple stored voice template signals;
if a degree of matching between the digitalized voice signal and one of the stored voice template signals is greater than a matching degree threshold, the terminal is waken up;
if degrees of matching between the digitalized voice signal and all of the stored voice template signals are smaller than the matching degree threshold, the processing is ended.

Further, upon reception of an instruction indicating normal voice operation, the microphone is supplied through a terminal main control power supply; and
the voice signal is acquired through the microphone, and the voice signal is processed to perform the normal voice operation.

Although only preferable embodiments of the disclosure are described, once those skilled in the art know the basic inventive concept, they can make other modifications and changes to these embodiments.

Thus the accompanying claims are intended to include preferable embodiments and all changes and modifications within the scope of protection of the disclosure.

It is obvious that various changes and variations can be made by those skilled in the art without departing from the scope of the disclosure. In this way, if these modifications and variations fall within the scope of the claims and equivalent techniques, the disclosure is intended to include these changes and variations.

### INDUSTRIAL APPLICABILITY

In the wake-on-voice method and device provided by the embodiments of the disclosure, the microphone, the wake-on-voice power supply, the wake-on-voice matching circuit, the terminal main control power supply, the terminal main control processing circuit are built-in circuits of the terminal per se; with only one microphone provided in the terminal for being used in a time division multiplexing way, a wake-on-voice function and a normal voice function can both be implemented without following the existing wake-on-voice techniques in which an additional microphone is required to be dedicatedly arranged to acquire a wake-on-voice signal and thus it is required to design an audio circuit, a specific structure and an identification (ID) mechanism for the dedicatedly arranged microphone. In this way, the technical solutions according to embodiments of the disclosure can implement wake-on-voice with a simple and low-cost circuit structure.

## Claims

1. A terminal, comprising a microphone (10), a power supply switching control circuit (11), a data switching control circuit (12), a wake-on-voice circuit (13), a wake-on-voice power supply (14) and a terminal main control power supply (16),
wherein the microphone (10) is arranged to: acquire a voice signal and input the voice signal to the data switching control circuit (12);
the power supply switching control circuit (11) is arranged to, when receiving an wake-on-voice instruction, supply the microphone (10) through the wake-on-voice power supply (14), and when receiving an instruction indicating normal voice operation, supply the microphone (10) through the terminal main control power supply (16);
the data switching control circuit (12) is arranged to, when receiving the wake-on-voice instruction, input the voice signal to the wake-on-voice circuit (13); and
the wake-on-voice circuit (13) is arranged to preprocess and match the input voice signal, and perform an operation according to a matching result,
wherein the microphone (10), the wake-on-voice power supply (14) and the terminal main control power supply (16) are built-in circuits of the terminal per se.

2. The terminal according to claim 1, wherein the wake-on-voice circuit (13) comprises a wake-on-voice preprocessing circuit (130) and a wake-on-voice matching circuit (131),
wherein the wake-on-voice preprocessing circuit (130) is arranged to preprocess the input voice signal and input the preprocessed voice signal to the wake-on-voice matching circuit (131); and
the wake-on-voice matching circuit (131) is arranged to match the preprocessed voice signal and perform the operation according to the matching result.

3. The terminal according to claim 1, further comprising a terminal main control processing circuit,
wherein the data switching control circuit (12) is further arranged to, when receiving the instruction indicating normal voice operation, input the voice signal to the terminal main control processing circuit; and
the terminal main control processing circuit is arranged to process the input voice signal to perform the normal voice operation.

4. The terminal according to claim 3, wherein
the power supply switching control circuit (11) is implemented by a first switching circuit comprising a first switch, a first capacitor, a first reference power supply and a first signal amplifier, the first switch comprising a Common, COM, terminal, a Normally Open, NO, terminal, a Normally Closed, NC, terminal, a control, CTR, terminal, a power supply terminal and a ground terminal.

5. The terminal according to claim 3 or 4, wherein the data switching control circuit (12) is implemented by a second switching circuit and a third switching circuit, wherein the second switching circuit comprises a second switch, a second capacitor, a second reference power supply and a second signal amplifier, the second switch comprising a COM terminal, an NO terminal , an NC terminal and a CTR terminal; and the third switching circuit comprises a third switch, a third capacitor, a third reference power supply and a third signal amplifier, the third switch comprising a COM terminal, an NO terminal, an NC terminal, a CTR terminal, a power supply terminal and a ground terminal.

6. The terminal according to claim 4 or 5, wherein
in the first switching circuit, the COM terminal of the first switch is connected to a COM terminal of a power supply of the microphone (10), the NC terminal of the first switch is connected to the wake-on-voice power supply (14), the NO terminal of the first switch is connected to the terminal main control power supply, the CTR terminal of the first switch is connected to an output of the first signal amplifier, the power supply terminal of the first switch is connected to the first reference power supply and to an end of the first capacitor, the ground terminal of the first switch is grounded, and the other end of the first capacitor is grounded;
in the second switching circuit, the COM terminal of the second switch is connected to a P signal terminal of the microphone (10), the NC terminal of the second switch is connected to a P signal input of the wake-on-voice circuit (13), the NO terminal of the second switch is connected to a P signal input of the terminal main control processing circuit, the CTR terminal of the second switch is connected to an output of the second signal amplifier, the power supply terminal of the second switch is connected to the second reference power supply and to an end of the second capacitor, the ground terminal of the second switch is grounded, and the other end of the second capacitor is grounded;
in the third switching circuit, the COM terminal of the third switch is connected to an N signal terminal of the microphone (10), the NC terminal of the third switch is connected to an N signal input of the wake-on-voice circuit (13), the NO terminal of the third switch is connected to an N signal input of the terminal main control processing circuit, the CTR terminal of the third switch is connected to an output of the third signal amplifier, the power supply terminal of the third switch is connected to the third reference power supply and to an end of the third capacitor, the ground terminal of the third switch is grounded, and the other end of the third capacitor is grounded.

7. The terminal according to claim 2, wherein
the wake-on-voice preprocessing circuit (130) comprises a fourth capacitor, a fifth capacitor, a sixth capacitor, a seventh capacitor, an eighth capacitor, a ninth capacitor, a fourth signal amplifier, a fifth signal amplifier, a first low pass filter, a second low pass filter; and/or, the wake-on-voice matching circuit (131) comprises an analog-to-digital converter, ADC, a Micro Controller Unit, MCU, and a memory.

8. The terminal according to claim 7, wherein
in the wake-on-voice preprocessing circuit (130), an input of the fourth capacitor is connected to a P signal input, an output of the fourth capacitor is connected to an input of the fourth signal amplifier; an output of the fourth signal amplifier is connected to an input of the sixth capacitor; an output of the sixth capacitor is connected to an input of the first low pass filter; an output of the first low pass filter is connected to an input of the eighth capacitor; an output of the eighth capacitor is connected to an input of the wake-on-voice matching circuit (131); an input of the fifth capacitor is connected to an N signal input, and an output of the fifth capacitor is connected to an input of the fifth signal amplifier; an output of the fifth signal amplifier is connected to an input of the seventh capacitor; an output of the seventh capacitor is connected to an input of the second low pass filter; an output of the second low pass filter is connected to an input of the ninth capacitor; an output of the ninth capacitor is connected to the input of the wake-on-voice matching circuit (131);
in the wake-on-voice matching circuit (131), an input of the ADC is connected an output of the wake-on-voice preprocessing circuit (130), an output of the ADC is connected to an input of the MCU, and the memory is connected to the input of the MCU.

9. A wake-on-voice method for a terminal comprising a microphone, a power supply switching control circuit, a data switching control circuit, a wake-on-voice circuit, a wake-on-voice power supply and a terminal main control power supply, the method comprising:
upon reception of an wake-on-voice instruction, supplying, by the power supply switching control circuit, the microphone through the wake-on-voice power supply;
acquiring a voice signal through the microphone, and inputting the acquired voice signal to the data switching control circuit;
inputting, by the data switching control circuit, the voice signal to the wake-on-voice circuit;
preprocessing and matching, by the wake-on-voice circuit, the input voice signal, and performing an operation according to a matching result,
wherein the microphone, the wake-on-voice power supply and the terminal main control power supply are built-in circuits of the terminal per se; and, upon reception of an instruction indicating normal voice operation, supplying, by the power supply switching control circuit, the microphone through the terminal main control power supply.

10. The method according to claim 9, wherein the step of preprocessing and matching the voice signal and performing the operation according to the matching result comprises:
performing amplification and low pass filtering on the voice signal to obtain the preprocessed voice signal;
performing analog-to-digital conversion on the preprocessed voice signal to obtain a digitalized voice signal;
comparing the digitalized voice signal with a plurality of stored voice template signals;
if a degree of matching between the digitalized voice signal and one of the stored voice template signals is greater than a matching degree threshold, waking up the terminal;
if degrees of matching between the digitalized voice signal and all of the stored voice template signals are smaller than the matching degree threshold, ending the processing.

11. The method according to claim 9 or 10, further comprising:
upon reception of an instruction indicating normal voice operation, supplying the microphone through a terminal main control power supply; and
acquiring the voice signal through the microphone, and processing the voice signal to perform the normal voice operation.

## Patentansprüche

1. Endgerät, umfassend ein Mikrofon (10), eine Energieversorgungs-Umschaltsteuerschaltung (11), eine Datenumschaltsteuerschaltung (12), eine Wecken-durch-Sprache-Schaltung (13), eine Wecken-durch-Sprache-Energieversorgung (14) und eine Endgerät-Hauptsteuerungs-Energieversorgung (16),
wobei das Mikrofon (10) für Folgendes angeordnet ist: Erfassen eines Sprachsignals und Eingeben des Sprachsignals in die Datenumschaltsteuerschaltung (12),
die Energieversorgungs-Umschaltsteuerschaltung (11) dafür eingerichtet ist, bei Empfang einer Wecken-durch-Sprache-Anweisung das Mikrofon (10) über die Wecken-durch-Sprache-Energieversorgung (14) zu versorgen und bei Empfang einer Anweisung, die normalen Sprachbetrieb angibt, das Mikrofon (10) über die Endgerät-Hauptsteuerungs-Energieversorgung (16) zu versorgen,
die Datenumschaltsteuerschaltung (12) dafür angeordnet ist, bei Empfang der Wecken-durch-Sprache-Anweisung das Sprachsignal in die Wecken-durch-Sprache-Schaltung (13) einzugeben, und
die Wecken-durch-Sprache-Schaltung (13) dafür angeordnet ist, das eingegebene Sprachsignal vorzuverarbeiten und abzugleichen und einen Vorgang gemäß einem Abgleichsergebnis durchzuführen,
wobei das Mikrofon (10), die Wecken-durch-Sprache-Energieversorgung (14) und die Endgerät-Hauptsteuerungs-Energieversorgung (16) eingebaute Schaltungen des Endgeräts an sich sind.

2. Endgerät nach Anspruch 1, wobei die Wecken-durch-Sprache-Schaltung (13) eine Wecken-durch-Sprache-Vorverarbeitungsschaltung (130) und eine Wecken-durch-Sprache-Abgleichsschaltung (131) umfasst,
wobei die Wecken-durch-Sprache-Vorverarbeitungsschaltung (130) dafür angeordnet ist, das eingegebene Sprachsignal vorzuverarbeiten und das vorverarbeitete Sprachsignal in die Wecken-durch-Sprache-Abgleichsschaltung (131) einzugeben, und
und die Wecken-durch-Sprache-Abgleichsschaltung (131) dafür angeordnet ist, das vorverarbeitete Sprachsignal abzugleichen und den Vorgang gemäß dem Abgleichsergebnis durchzuführen.

3. Endgerät nach Anspruch 1, ferner eine Endgerät-Hauptsteuerungs-Verarbeitungsschaltung umfassend,
wobei die Datenumschaltsteuerschaltung (12) ferner dafür angeordnet ist, bei Empfang der Anweisung, die normalen Sprachbetrieb angibt, das Sprachsignal in die Endgerät-Hauptsteuerungs-Verarbeitungsschaltung einzugeben, und
die Endgerät-Hauptsteuerungs-Verarbeitungsschaltung dafür angeordnet ist, das eingegebene Sprachsignal zu verarbeiten, um den normalen Sprachbetrieb durchzuführen.

4. Endgerät nach Anspruch 3, wobei
die Energieversorgungs-Umschaltsteuerschaltung (11) durch eine erste Umschaltschaltung implementiert ist, die einen ersten Schalter, einen ersten Kondensator, eine erste Referenzenergieversorgung und einen ersten Signalverstärker umfasst, wobei der erste Schalter eine gemeinsame Klemme, COM, eine normal offene Klemme, NO, eine normal geschlossene Klemme, NC, eine Steuerklemme, CTR, eine Energieversorgungsklemme und eine Masseklemme umfasst.

5. Endgerät nach Anspruch 3 oder 4, wobei die Datenumschaltsteuerschaltung (12) durch eine zweite Umschaltschaltung und eine dritte Umschaltschaltung implementiert ist, wobei die zweite Umschaltschaltung einen zweiten Schalter, einen zweiten Kondensator, eine zweite Referenzenergieversorgung und einen zweiten Signalverstärker umfasst, wobei der zweite Schalter eine COM-Klemme, eine NO-Klemme, eine NC-Klemme und eine CTR-Klemme umfasst, und die dritte Umschaltschaltung einen dritten Schalter, einen dritten Kondensator, eine dritte Referenzenergieversorgung und einen dritten Signalverstärker umfasst, wobei der dritte Schalter eine COM-Klemme, eine NO-Klemme, eine NC-Klemme, eine CTR-Klemme, eine Energieversorgungsklemme und eine Masseklemme umfasst.

6. Endgerät nach Anspruch 4 oder 5, wobei
in der ersten Umschaltschaltung die COM-Klemme des ersten Schalters mit einer COM-Klemme einer Energieversorgung des Mikrofons (10) verbunden ist, die NC-Klemme des ersten Schalters mit der Wecken-durch-Sprache-Energieversorgung (14) verbunden ist, die NO-Klemme des ersten Schalters mit der Endgerät-Hauptsteuerungs-Energieversorgung verbunden ist, die CTR-Klemme des ersten Schalters mit einem Ausgang des ersten Signalverstärkers verbunden ist, die Energieversorgungsklemme des ersten Schalters mit der ersten Referenzenergieversorgung und einem Ende des ersten Kondensators verbunden ist, die Masseklemme des ersten Schalters geerdet ist und das andere Ende des ersten Kondensators geerdet ist,
in der zweiten Umschaltschaltung die COM-Klemme des zweiten Schalters mit einer P-Signalklemme des Mikrofons (10) verbunden ist, die NC-Klemme des zweiten Schalters mit einem P-Signaleingang der Wecken-durch-Sprache-Schaltung (13) verbunden ist, die NO-Klemme des zweiten Schalters mit einem P-Signaleingang der Endgerät-Hauptsteuerungs-Energieversorgung verbunden ist, die CTR-Klemme des zweiten Schalters mit einem Ausgang des zweiten Signalverstärkers verbunden ist, die Energieversorgungsklemme des zweiten Schalters mit der zweiten Referenzenergieversorgung und einem Ende des zweiten Kondensators verbunden ist, die Masseklemme des zweiten Schalters geerdet ist und das andere Ende des zweiten Kondensators geerdet ist,
in der dritten Umschaltschaltung die COM-Klemme des dritten Schalters mit einer N-Signalklemme des Mikrofons (10) verbunden ist, die NC-Klemme des dritten Schalters mit einem N-Signaleingang der Wecken-durch-Sprache-Schaltung (13) verbunden ist, die NO-Klemme des dritten Schalters mit einem N-Signaleingang der Endgerät-Hauptsteuerungs-Energieversorgung verbunden ist, die CTR-Klemme des dritten Schalters mit einem Ausgang des dritten Signalverstärkers verbunden ist, die Energieversorgungsklemme des dritten Schalters mit der dritten Referenzenergieversorgung und einem Ende des dritten Kondensators verbunden ist, die Masseklemme des dritten Schalters geerdet ist und das andere Ende des dritten Kondensators geerdet ist.

7. Endgerät nach Anspruch 2, wobei
die Wecken-durch-Sprache-Vorverarbeitungsschaltung (130) einen vierten Kondensator, einen fünften Kondensator, einen sechsten Kondensator, einen siebten Kondensator, einen achten Kondensator, einen neunten Kondensator, einen vierten Signalverstärker, einen fünften Signalverstärker, ein erstes Tiefpassfilter, ein zweites Tiefpassfilter umfasst und/oder die Wecken-durch-Sprache-Abgleichsschaltung (131) einen Analog-Digital-Wandler, ADC, einen Mikrocontroller, MCU, und einen Speicher umfasst.

8. Endgerät nach Anspruch 7, wobei
in der Wecken-durch-Sprache-Vorverarbeitungsschaltung (130) ein Eingang des vierten Kondensators mit einem P-Signaleingang verbunden ist, ein Ausgang des vierten Kondensators mit einem Eingang des vierten Signalverstärkers verbunden ist, ein Ausgang des vierten Signalverstärkers mit einem Eingang des sechsten Kondensators verbunden ist, ein Ausgang des sechsten Kondensators mit einem Eingang des ersten Tiefpassfilters verbunden ist, ein Ausgang des ersten Tiefpassfilters mit einem Eingang des achten Kondensators verbunden ist, ein Ausgang des achten Kondensators mit einem Eingang der Wecken-durch-Sprache-Abgleichsschaltung (131) verbunden ist, ein Eingang des fünften Kondensators mit einem N-Signaleingang verbunden ist und ein Ausgang des fünften Kondensators mit einem Eingang des fünften Signalverstärkers verbunden ist, ein Ausgang des fünften Signalverstärkers mit einem Eingang des siebten Kondensators verbunden ist, ein Ausgang des siebten Kondensators mit einem Eingang des zweiten Tiefpassfilters verbunden ist, ein Ausgang des zweiten Tiefpassfilters mit einem Eingang des neunten Kondensators verbunden ist, ein Ausgang des neunten Kondensators mit dem Eingang der Wecken-durch-Sprache-Abgleichsschaltung (131) verbunden ist,
in der Wecken-durch-Sprache-Abgleichsschaltung (131) ein Eingang des ADC mit einem Ausgang der Wecken-durch-Sprache-Vorverarbeitungsschaltung (130) verbunden ist, ein Ausgang des ADC mit einem Eingang des MCU verbunden ist und der Speicher mit dem Eingang des MCU verbunden ist.

9. Wecken-durch-Sprache-Verfahren für ein Endgerät, das ein Mikrofon, eine Energieversorgungs-Umschaltsteuerschaltung, eine Datenumschaltsteuerschaltung, eine Wecken-durch-Sprache-Schaltung, eine Wecken-durch-Sprache-Energieversorgung und eine Endgerät-Hauptsteuerungs-Energieversorgung umfasst, wobei das Verfahren Folgendes umfasst:
bei Empfang einer Wecken-durch-Sprache-Anweisung Versorgen des Mikrofons über die Wecken-durch-Sprache-Energieversorgung durch die Energieversorgungs-Umschaltsteuerschaltung,
Erfassen eines Sprachsignals durch das Mikrofon und Eingeben des erfassten Sprachsignals in die Datenumschaltsteuerschaltung,
Eingeben des Sprachsignals in die Wecken-durch-Sprache-Schaltung durch die Datenumschaltsteuerschaltung,
Vorverarbeiten und Abgleichen des eingegebenen Sprachsignals durch die Wecken-durch-Sprache-Schaltung und Durchführen eines Vorgangs gemäß einem Abgleichsergebnis,
wobei das Mikrofon, die Endgerät-Hauptsteuerungs-Energieversorgung und die Endgerät-Hauptsteuerungs-Energieversorgung eingebaute Schaltungen des Endgerätes an sich sind,
und bei Empfang einer Anweisung, die normalen Sprachbetrieb angibt, Versorgen des Mikrofons über die Endgerät-Hauptsteuerungs-Energieversorgung durch die Energieversorgungs-Umschaltsteuerschaltung.

10. Verfahren nach Anspruch 9, wobei der Schritt des Vorverarbeitens und Abgleichens des Sprachsignals und des Durchführens des Vorgangs gemäß dem Abgleichsergebnis Folgendes umfasst:
Durchführen von Verstärkung und Tiefpassfiltern an dem Sprachsignal, um das vorverarbeitete Sprachsignal zu erhalten,
Durchführen von Analog-Digital-Wandlung an dem vorverarbeiteten Sprachsignal, um ein digitalisiertes Sprachsignal zu erhalten,
Vergleichen des digitalisierten Sprachsignals mit mehreren gespeicherten Vorlagen-Sprachsignalen,
wenn der Grad der Übereinstimmung zwischen dem digitalisierten Sprachsignal und einem der gespeicherten Vorlagen-Sprachsignale größer als ein Grenzwert des Übereinstimmungsgrades ist, Wecken des Endgerätes,
wenn der Grad der Übereinstimmung zwischen dem digitalisierten Sprachsignal und allen gespeicherten Vorlagen-Sprachsignalen kleiner als ein Grenzwert des Übereinstimmungsgrades ist, Beenden der Verarbeitung.

11. Verfahren nach Anspruch 9 oder 10, ferner Folgendes umfassend:
bei Empfang einer Anweisung, die normalen Sprachbetrieb angibt, Versorgen des Mikrofons über eine Endgerät-Hauptsteuerungs-Energieversorgung und
Erfassen des Sprachsignals über das Mikrofon und Verarbeiten des Sprachsignals, um den normalen Sprachbetrieb durchzuführen.

## Revendications

1. Terminal, comprenant un microphone (10), un circuit de commande de commutation d'alimentation électrique (11), un circuit de commande de commutation de données (12), un circuit de réveil vocal (13), une alimentation électrique de réveil vocal (14) et une alimentation électrique de commande principale de terminal (16) ;
dans lequel le microphone (10) est agencé de manière à : acquérir un signal vocal et appliquer en entrée le signal vocal dans le circuit de commande de commutation de données (12) ;
le circuit de commande de commutation d'alimentation électrique (11) est agencé de manière à, lors de la réception d'une instruction de réveil vocal, alimenter le microphone (10) par l'intermédiaire de l'alimentation électrique de réveil vocal (14), et lors de la réception d'une instruction indiquant un fonctionnement vocal normal, alimenter le microphone (10) par l'intermédiaire de l'alimentation électrique de commande principale de terminal (16) ;
le circuit de commande de commutation de données (12) est agencé de manière à, lors de la réception de l'instruction de réveil vocal, appliquer en entrée le signal vocal dans le circuit de réveil vocal (13) ; et
le circuit de réveil vocal (13) est agencé de manière à prétraiter et à mettre en correspondance le signal vocal appliqué en entrée, et à mettre en oeuvre un fonctionnement selon un résultat de correspondance ;
dans lequel le microphone (10), l'alimentation électrique de réveil vocal (14) et l'alimentation électrique de commande principale de terminal (16) sont des circuits intégrés du terminal en tant que tel.

2. Terminal selon la revendication 1, dans lequel le circuit de réveil vocal (13) comprend un circuit de prétraitement de réveil vocal (130) et un circuit de mise en correspondance de réveil vocal (131) ;
dans lequel le circuit de prétraitement de réveil vocal (130) est agencé de manière à prétraiter le signal vocal appliqué en entrée et à appliquer en entrée le signal vocal prétraité dans le circuit de mise en correspondance de réveil vocal (131) ; et
le circuit de mise en correspondance de réveil vocal (131) est agencé de manière à mettre en correspondance le signal vocal prétraité et à mettre en oeuvre le fonctionnement selon le résultat de correspondance.

3. Terminal selon la revendication 1, comprenant en outre un circuit de traitement de commande principale de terminal ;
dans lequel le circuit de commande de commutation de données (12) est en outre agencé de manière à, lors de la réception de l'instruction indiquant un fonctionnement vocal normal, appliquer en entrée le signal vocal dans le circuit de traitement de commande principale de terminal ; et
le circuit de traitement de commande principale de terminal est agencé de manière à traiter le signal vocal appliqué en entrée en vue de mettre en oeuvre le fonctionnement vocal normal.

4. Terminal selon la revendication 3, dans lequel :
le circuit de commande de commutation d'alimentation électrique (11) est mis en oeuvre par un premier circuit de commutation comprenant un premier commutateur, un premier condensateur, une première alimentation électrique de référence et un premier amplificateur de signal, le premier commutateur comprenant une borne commune, COM, une borne normalement ouverte, NO, une borne normalement fermée, NC, une borne de commande, CTR, une borne d'alimentation électrique et une borne de masse.

5. Terminal selon la revendication 3 ou 4, dans lequel le circuit de commande de commutation de données (12) est mis en oeuvre par un deuxième circuit de commutation et un troisième circuit de commutation, dans lequel le deuxième circuit de commutation comprend un deuxième commutateur, un deuxième condensateur, une deuxième alimentation électrique de référence et un deuxième amplificateur de signal, le deuxième commutateur comprenant une borne COM, une borne NO, une borne NC et une borne CTR ; et le troisième circuit de commutation comprend un troisième commutateur, un troisième condensateur, une troisième alimentation électrique de référence et un troisième amplificateur de signal, le troisième commutateur comprenant une borne COM, une borne NO, une borne NC, une borne CTR, une borne d'alimentation électrique et une borne de masse.

6. Terminal selon la revendication 4 ou 5, dans lequel :
dans le premier circuit de commutation, la borne COM du premier commutateur est connectée à une borne COM d'une alimentation électrique du microphone (10), la borne NC du premier commutateur est connectée à l'alimentation électrique de réveil vocal (14), la borne NO du premier commutateur est connectée à l'alimentation électrique de commande principale de terminal, la borne CTR du premier commutateur est connectée à une sortie du premier amplificateur de signal, la borne d'alimentation électrique du premier commutateur est connectée à la première alimentation électrique de référence et à une extrémité du premier condensateur, la borne de masse du premier commutateur est mise à la terre, et l'autre extrémité du premier condensateur est mise à la terre ;
dans le deuxième circuit de commutation, la borne COM du deuxième commutateur est connectée à une borne de signal P du microphone (10), la borne NC du deuxième commutateur est connectée à une entrée de signal P du circuit de réveil vocal (13), la borne NO du deuxième commutateur est connectée à une entrée de signal P du circuit de traitement de commande principale de terminal, la borne CTR du deuxième commutateur est connectée à une sortie du deuxième amplificateur de signal, la borne d'alimentation électrique du deuxième commutateur est connectée à la deuxième alimentation électrique de référence et à une extrémité du deuxième condensateur, la borne de masse du deuxième commutateur est mise à la terre, et l'autre extrémité du deuxième condensateur est mise à la terre ;
dans le troisième circuit de commutation, la borne COM du troisième commutateur est connectée à une borne de signal N du microphone (10), la borne NC du troisième commutateur est connectée à une entrée de signal N du circuit de réveil vocal (13), la borne NO du troisième commutateur est connectée à une entrée de signal N du circuit de traitement de commande principale de terminal, la borne CTR du troisième commutateur est connectée à une sortie du troisième amplificateur de signal, la borne d'alimentation électrique du troisième commutateur est connectée à la troisième alimentation électrique de référence et à une extrémité du troisième condensateur, la borne de masse du troisième commutateur est mise à la terre, et l'autre extrémité du troisième condensateur est mise à la terre.

7. Terminal selon la revendication 2, dans lequel :
le circuit de prétraitement de réveil vocal (130) comprend un quatrième condensateur, un cinquième condensateur, un sixième condensateur, un septième condensateur, un huitième condensateur, un neuvième condensateur, un quatrième amplificateur de signal, un cinquième amplificateur de signal, un premier filtre passe-bas, un second filtre passe-bas ; et/ou, le circuit de mise en correspondance de réveil vocal (131) comprend un convertisseur analogique-numérique, ADC, une unité de microcontrôleur, MCU, et une mémoire.

8. Terminal selon la revendication 7, dans lequel :
dans le circuit de prétraitement de réveil vocal (130), une entrée du quatrième condensateur est connectée à une entrée de signal P, une sortie du quatrième condensateur est connectée à une entrée du quatrième amplificateur de signal ; une sortie du quatrième amplificateur de signal est connectée à une entrée du sixième condensateur ; une sortie du sixième condensateur est connectée à une entrée du premier filtre passe-bas ; une sortie du premier filtre passe-bas est connectée à une entrée du huitième condensateur ; une sortie du huitième condensateur est connectée à une entrée du circuit de mise en correspondance de réveil vocal (131) ; une entrée du cinquième condensateur est connectée à une entrée de signal N, et une sortie du cinquième condensateur est connectée à une entrée du cinquième amplificateur de signal ; une sortie du cinquième amplificateur de signal est connectée à une entrée du septième condensateur ; une sortie du septième condensateur est connectée à une entrée du second filtre passe-bas ; une sortie du second filtre passe-bas est connectée à une entrée du neuvième condensateur ; une sortie du neuvième condensateur est connectée à l'entrée du circuit de mise en correspondance de réveil vocal (131) ;
dans le circuit de mise en correspondance de réveil vocal (131), une entrée du convertisseur ADC est connectée à une sortie du circuit de prétraitement de réveil vocal (130), une sortie du convertisseur ADC est connectée à une entrée de l'unité MCU, et la mémoire est connectée à l'entrée de l'unité MCU.

9. Procédé de réveil vocal pour un terminal comprenant un microphone, un circuit de commande de commutation d'alimentation électrique, un circuit de commande de commutation de données, un circuit de réveil vocal, une alimentation électrique de réveil vocal et une alimentation électrique de commande principale de terminal, le procédé comprenant les étapes ci-dessous consistant à :
suite à la réception d'une instruction de réveil vocal, alimenter, par le biais du circuit de commande de commutation d'alimentation électrique, le microphone à travers l'alimentation électrique de réveil vocal ;
acquérir un signal vocal par l'intermédiaire du microphone, et appliquer en entrée le signal vocal acquis, dans le circuit de commande de commutation de données ;
appliquer en entrée, par le biais du circuit de commande de commutation de données, le signal vocal dans le circuit de réveil vocal ;
prétraiter et mettre en correspondance, par le biais du circuit de réveil vocal, le signal vocal appliqué en entrée, et mettre en oeuvre un fonctionnement selon un résultat de correspondance ;
dans lequel le microphone, l'alimentation électrique de réveil vocal et l'alimentation électrique de commande principale de terminal sont des circuits intégrés du terminal en tant que tel ; et
suite à la réception d'une instruction indiquant un fonctionnement vocal normal, alimenter, par le biais du circuit de commande de commutation d'alimentation électrique, le microphone, à travers l'alimentation électrique de commande principale de terminal.

10. Procédé selon la revendication 9, dans lequel l'étape de prétraitement et de mise en correspondance du signal vocal, et l'étape de mise en oeuvre du fonctionnement selon le résultat de correspondance comprennent les étapes ci-dessous consistant à :
mettre en oeuvre une amplification et un filtrage passe-bas sur le signal vocal en vue d'obtenir le signal vocal prétraité ;
mettre en oeuvre une conversion analogique-numérique sur le signal vocal prétraité en vue d'obtenir un signal vocal numérisé ;
comparer le signal vocal numérisé à une pluralité de signaux de modèles vocaux stockés ;
si un degré de correspondance entre le signal vocal numérisé et l'un des signaux de modèles vocaux stockés est supérieur à un seuil de degré de correspondance, réveiller le terminal ;
si des degrés de correspondance entre le signal vocal numérisé et tous les signaux de modèles vocaux stockés sont inférieurs au seuil de degré de correspondance, mettre fin au traitement.

11. Procédé selon la revendication 9 ou 10, comprenant en outre les étapes ci-dessous consistant à :
suite à la réception d'une instruction indiquant un fonctionnement vocal normal, alimenter le microphone par l'intermédiaire d'une alimentation électrique de commande principale de terminal ; et
acquérir le signal vocal par l'intermédiaire du microphone et traiter le signal vocal en vue de mettre en oeuvre le fonctionnement vocal normal.
